Europäisches Patentamt

European Patent Office

Office européen des brevets

(19)

(11) Numéro de publication : **0 340 081 B1**

(12) # FASCICULE DE BREVET EUROPEEN

(45) Date de publication du fascicule du brevet :
**29.05.91 Bulletin 91/22**

(51) Int. Cl.⁵ : **B26D 3/16**

(21) Numéro de dépôt : **89401121.2**

(22) Date de dépôt : **21.04.89**

(54) Dispositif de tronçonnage de tubes.

(30) Priorité : **25.04.88 FR 8805434**

(43) Date de publication de la demande :
**02.11.89 Bulletin 89/44**

(45) Mention de la délivrance du brevet :
**29.05.91 Bulletin 91/22**

(84) Etats contractants désignés :
**BE CH DE ES GB IT LI LU NL SE**

(56) Documents cités :
**DE-A- 2 028 522**
**FR-A- 2 589 384**
**US-A- 2 536 813**
**US-A- 3 670 408**

(73) Titulaire : **LHOMME SA (Société anonyme)**
**Route de Paris**
**F-89140 Pont sur Yonne (FR)**

(72) Inventeur : **Languillat, Jean-Paul**
**Vallières**
**F-89260 Thorigny sur Oreuse (FR)**

(74) Mandataire : **Chambon, Gérard**
**Cabinet Chambon 6 et 8 avenue Salvador**
**Allende**
**F-93804 Epinay-sur-Seine Cédex (FR)**

## Description

L'invention concerne un dispositif de tronçonnage de tubes.

Il est connu de tronçonner des tubes au moyen de couteaux qui pénètrent dans l'épaisseur du tube alors que celui-ci est entraîné en rotation.

Pour tronçonner certains tubes et plus particulièrement les tubes en matière peu rigide, tels les tubes en carton, il est nécessaire de disposer à l'intérieur du tube une contrepartie sur laquelle le couteau vient finir sa coupe.

Jusqu'à présent, la contrepartie était reliée mécaniquement vers l'extérieur par un moyen disposé à l'intérieur du tube afin d'assurer le maintien de ladite contrepartie en position fixe ou permettre le déplacement longitudinal de celle-ci.

Les tronçonneuses destinées à découper des tubes unitaires en plusieurs tronçons sont en effet munies de couteaux et d'une contrepartie fixes longitudinalement, cette dernière étant aménagée sur un mandrin fixe sur lequel le tube est enfilé.

Au contraire, dans les dispositifs de tronçonnage d'un tube fabriqué en continu, telle une spiraleuse pour tube carton par exemple, il est nécessaire que le ou les couteaux et la contrepartie suivent longitudinalement et de manière synchrone le tube en cours de fabrication, au moment de la coupe, les couteaux et la contrepartie étant ramenés en position initiale après chaque tronçonnage par un moyen passant par le mandrin le roulage de la spiraleuse.

Une liaison mécanique de la contrepartie, vers l'extérieur, et qui est disposée à l'intérieur du tube, est un handicap certain et empêche notamment certaines applications.

C'est pourquoi on a cherché et trouvé un moyen qui permet de maintenir en position et/ou de déplacer la contrepartie dénommée ci-après contre-couteau, sans que celui-ci ne soit relié mécaniquement à un moyen extérieur.

Un tel dispositif de tronçonnage fait notamment l'objet du brevet Français numéro 8516135, publié sous le numéro 2589384. Le dispositif décrit dans le brevet susmentionné comporte un contre-couteau disposé à l'intérieur du tube à tronçonner et qui est relié mécaniquement à un noyau de forte perméabilité magnétique, tandis qu'un bobinage est enroulé dans une carcasse autour du tube à tronçonner pour créer un champ magnétique dans ledit noyau à travers le tube à tronçonner de manière à pouvoir agir magnétiquement sur la position longitudinale dudit noyau et par là même sur celle du contre-couteau en fonction de la position longitudinale du couteau.

Un tel dispositif donne satisfaction. Toutefois, l'inventeur a amélioré ce dispositif par des perfectionnements, qui font l'objet du présent brevet.

Un dispositif selon l'invention du type susmentionné est remarquable en ce que la carcasse est annulaire et présente une enveloppe cylindrique extérieure, une partie cylindrique centrale, qui est en matériau de faible perméabilité (ou susceptibilité) magnétique, et deux extrémités axiales, qui comportent au contraire des éléments en matériau de forte perméabilité magnétique pour diriger et conformer les lignes d'induction.

De la sorte, les lignes d'induction passent par les extrémités axiales et viennent longitudinalement dans le noyau pour le maintenir en place.

Il est évidemment possible d'imaginer d'utiliser un dispositif pour chaque diamètre extérieur de tube ou pour des fourchettes assez réduites de diamètres.

En effet, lorsque le diamètre extérieur du tube devient trop petit par rapport au diamètre intérieur de la carcasse, le flux magnétique dans le noyau s'affaiblit d'autant plus.

Pour résoudre ce problème, l'inventeur a imaginé de pouvoir équiper le dispositif d'au moins une paire de manchons tubulaires, qui sont emmanchés à chacune des extrémités de la carcasse et qui sont formés par un matériau de forte perméabilité magnétique, les diamètres respectivement extérieur et intérieur de chaque manchon étant adaptés aux diamètres respectivement intérieur des éléments d'extrémité de la carcasse, et extérieur du tube à tronçonner.

Ainsi, il suffit de prévoir plusieurs paires de manchons, dont les dimensions sont fonction des diamètres extérieurs des tubes à tronçonner, lesdits manchons étant aménagés de manière à pouvoir être fixés de façon amovible.

Le même dispositif peut ainsi être utilisé pour un grand nombre de diamètres différents de tubes.

Toutefois, un dispositif pour un diamètre particulier peut posséder à demeure une seule paire de manchons. De la sorte, la même machine peut être adaptée dans chaque cas selon les besoins d'un utilisateur particulier.

En outre, pour compenser le poids du noyau, l'inventeur préconise un mode de réalisation tout à fait original, qui est remarquable en ce que chaque manchon tubulaire a la forme d'un tronc de cylindre circulaire, tandis que des repères et/ou des moyens de fixation sont prévus de manière telle que la grande dimension longitudinale soit disposée vers la partie haute et vers l'intérieur de la carcasse, la base circulaire sensiblement perpendiculaire à son axe longitudinal étant disposée du côté tourné vers l'extérieur.

De plus, pour faciliter la mise en place de chaque manchon, un mode de réalisation est remarquable en ce que la tranche des manchons par laquelle ceux-ci sont introduits dans la carcasse est légèrement chanfreinée vers l'axe longitudinal desdits manchons.

L'invention sera bien comprise à la lecture de la description qui va suivre et qui se réfère aux dessins annexés, dans lesquels :

   – la figure 1 montre schématiquement un dispositif selon l'invention avec arrachement partiel,

– la figure 2 est une coupe axiale d'un manchon selon l'invention.

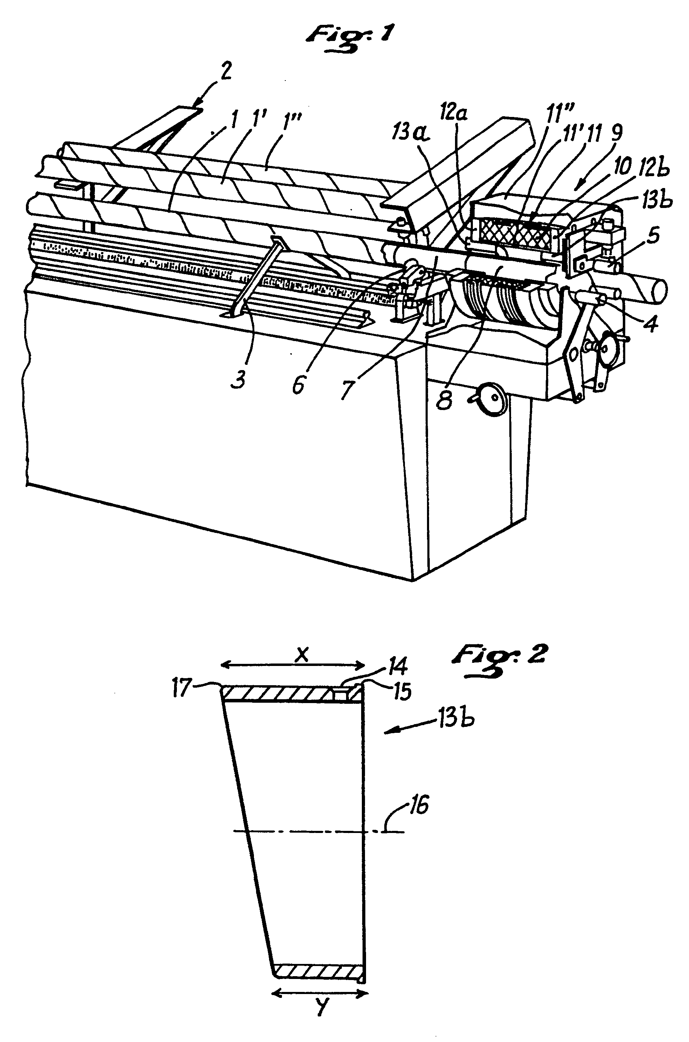

Sur la figure 1, on peut voir partiellement une machine destinée à tronçonner des tubes unitaires 1, 1' et 1".

Les tubes 1', 1" sont disposés sur un appareil de distribution ou d'alimentation 2 afin de les mettre en place successivement au fur et à mesure des opérations de tronçonnage, le tube 1 étant prêt à être tronçonné.

Le tube 1 est guidé et centré par des moyens tel que le guide 3 et/ou les cylindres 4 et 5.

Vers l'autre extrémité de la machine, des moyens (non représentés) sont prévus pour pousser les tubes à tronçonner et pour les entraîner en rotation.

En effet, pour tronçonner chaque tube, on l'entraîne en rotation devant au moins un couteau 6.

A l'intérieur du tube 1 à tronçonner, est disposée une contrepartie ou contre-couteau 7.

Le contre-couteau 7 est relié mécaniquement à un noyau de forte perméabilité magnétique 8.

Le noyau 8 permet de maintenir en position le contre-couteau 7 à l'aide d'un moyen d'induction magnétique 9.

Le moyen d'induction magnétique 9 comporte essentiellement un bobinage 10, qui est disposé dans une carcasse 11 (une alimentation électrique du bobinage étant, bien entendu, prévue).

Comme le montre bien la figure 1, le bobinage 10 est disposé de manière à entourer le tube 1 à tronçonner.

La carcasse 11, de forme annulaire, présente une partie cylindrique centrale 11', c'est-à-dire la partie la plus voisine du tube 1, et une enveloppe cylindrique extérieure ou cuirasse 11". La partie central 11' est formée par un matériau de faible perméabilité magnétique. Par contre, les extrémités de la carcasse sont munies de bagues 12a et 12b de forte perméabilité magnétique, de façon à bien diriger le flux magnétique dans le noyau 8.

On peu également voir sur la figure 1, une paire de manchons tubulaires 13a et 13b, le manchon 13b étant représenté de manière agrandie et en coupe sur la figure 2.

Les manchons 13a et 13b sont formés d'un matériau de forte perméabilité magnétique, de la même manière que les bagues 12a et 12b, de façon à constituer des masses polaires. Les manchons 13a et 13b sont emmanchés aux deux extrémités de la carcasse 11, dans les bagues, respectivement 12a et 12b. Les diamètres des manchons sont choisis de façon appropriée en fonction, bien sûr, des diamètres des bagues 12a et 12b et du diamètre extérieur du tube à tronçonner, afin de laisser un jeu le plus réduit possible entre ledit tube et lesdits manchons (le jeu apparent sur la figure 1 est un peu exagéré pour une meilleure visualisation).

Comme le montre la figure 2, chaque manchon est pourvu d'un ajour 14 destiné à recevoir une clavette en vue de sa fixation, mais il est clair que tout autre moyen de fixation, de préférence amovible, est possible.

Les manchons présentent, en outre, un épaulement 15 (figure 2), en vue de venir en butée sur la carcasse 11 du bobinage.

Comme le montre également bien la figure 2, chaque manchon a la forme d'un tronc de cylindre circulaire, la base circulaire sensiblement perpendiculaire à l'axe longitudinal 16 dudit manchon étant destinée à être positionnée du côté tourné vers l'extérieur, c'est-à-dire dans la position représentée à la figure 2 pour le manchon 13b de la figure 1. On peut voir aussi que la grande dimension longitudinale X est destinée à venir dans la partie haute de la carcasse (encore une fois comme représenté) et la petite dimension Y diamétralement opposée, bien sûr vers le bas.

Le positionnement est obtenu, par exemple, par la position angulaire de l'ajour 14. Il est clair que le manchon 13a (non représenté plus spécialement sur la figure 2) est symétrique du manchon 13b par rapport à un plan vertical.

Comme le montre encore la figure 2, la tranche frontale du manchon, c'est-à-dire la tranche par laquelle ledit manchon est introduit dans la machine, présente un léger chanfrein 17, vers l'axe 16.

Les avantages et les utilisations de manchons tels que 13a et 13b ont déjà été explicités ci-avant.

Si le mode de réalisation représenté à la figure 1 concerne une tronçonneuse pour tubes unitaires, comme décrit dans le brevet précité FR-A-2 589 384, ledit brevet décrit également un dispositif de tronçonnage pour un tube fabriqué en continu. La présente invention s'applique, bien sûr, aussi aux modes de réalisation pour tubes fabriqués en continu et dans lesquels le moyen d'induction est, soit mobile, soit fixe, un élément tubulaire mobile autour du tube étant alors prévu de la manière décrite dans le brevet FR-A-2 589 384. Dans ce dernier cas (moyen d'induction fixe et élément tubulaire mobile), les diamètres intérieurs des manchons tiendront, bien sûr, compte du diamètre extérieur de l'élément tubulaire et il y a lieu de donner l'acception la plus générale aux expressions "adapté" ou "fonction de" utilisées par ailleurs pour parler du diamètre intérieur des manchons par rapport au diamètre extérieur des tubes. La liaison entre le noyau 8 et le contre-couteau 7 peut être de toute nature et notamment, comme décrit dans le brevet précité.

**Revendications**

1. Dispositif de tronçonnage de tubes, comportant au moins un couteau (6), qui coopère en fin de coupe avec une contrepartie dénommée ci-après contre-couteau (7) disposé à l'intérieur du tube (1) à tronçonner et qui est relié mécaniquement à un noyau (8) de forte perméabilité magnétique, tandis qu'un bobinage (10) est enroulé dans une carcasse (11) autour du tube à tronçonner, pour créer un champ magnétique dans ledit noyau (8) à travers le tube (1) à tronçonner de manière à pouvoir agir magnétiquement sur la position longitudinale dudit noyau (8) et donc sur celle du contre-couteau (7), dispositif caractérisé en ce que la carcasse (11) est annulaire et présente une enveloppe cylindrique extérieure (11″) une partie cylindrique centrale (11′), qui est en matériau de faible perméabilité magnétique, et deux extrémités axiales, qui comportent au contraire des éléments (12a, 12b) en matériau de forte perméabilité magnétique pour diriger et conformer les lignes d'induction.

2. Dispositif selon la revendication 1, caractérisé en ce qu'il comporte au moins une paire de manchons (13a, 13b) tubulaires, qui sont emmanchés à chacune des extrémités axiales de la carcasse et qui sont formés par un matériau de forte perméabilité magnétique, les diamètres respectivement extérieur et intérieur de chaque manchon étant adaptés aux diamètres respectivement intérieur des éléments d'extrémité (12a, 12b) de la carcasse, et extérieur du tube (1) à tronçonner.

3. Dispositif selon la revendication 2, caractérisé en ce que plusieurs paires de manchons sont prévues, dont les dimensions sont fonction des diamètres des tubes à tronçonner, lesdits manchons étant aménagés de manière à pouvoir être fixés de façon amovible.

4. Dispositif selon l'une des revendications 2 et 3, caractérisé en ce que chaque manchon tubulaire a la forme d'un tronc de cylindre circulaire, tandis que des repères et/ou des moyens de fixation sont prévus de manière telle que la grande dimension longitudinale soit disposée vers la partie haute et vers l'intérieur de la carcasse (11), la base circulaire sensiblement perpendiculaire à son axe longitudinal étant disposée du côté tourné vers l'extérieur.

5. Dispositif selon l'une des revendication 1 à 4, caractérisé en ce que la tranche des manchons par laquelle ceux-ci sont introduits dans la carcasse est légèrement chanfreinée vers l'axe longitudinal desdits manchons.

## Ansprüche

1. Vorrichtung zum Schneiden von Rohren mit mindestens einem Messer (6), das am Ende des Schnittes mit einem im folgenden Gegenmesser (7) genannten Gegenelement zusammenwirkt, welches im Inneren des zu schneidenden Rohres (1) angeordnet und mechanisch mit einem Magnetkern (8) mit starker magnetischer Permeabilität verbunden ist, während eine Spule (10) in einem Gehäuse (11) um das zu schneidende Rohr gewickelt ist, um in dem Magnetkern (8) ein Magnetfeld durch das zu schneidende Rohr (1) hindurch zu erzeugen derart, daß eine magnetische Einwirkung auf die Position in Längsrichtung des Kernes (8) und damit auf die des Gegenmessers (7) möglich ist, dadurch gekennzeichnet, daß das Gehäuse (11) ringförmig ist und einen äußeren zylindrischen Mantel (11″), einen zentralen zylindrischen Teil (11′) aus Material mit schwacher magnetischer Permeabilität und zwei axiale Enden aufweist, die hingegen mit zwei Elementen (12a, 12b) aus Material mit starker magnetischer Permeabilität versehen sind, um die Induktionslinien zu leiten und zu formen.

2. Vorrichtung nach Anspruch 1, dadurch gekennzeichnet, daß sie mit wenigstens einem Paar rohrförmiger Hülsen (13a, 13b) versehen ist, die an jedem axialen Ende des Gehäuses eingepreßt und aus einem Material mit starker magnetischer Permeabilität gebildet sind, und jeweils die Außen- und Innendurchmesser jeder Hülse jeweils an die Innendurchmesser der axialen Enden (12a, 12b) des Gehäuses und die Außendurchmesser des zu schneidenden Rohres (1) angepaßt sind.

3. Vorrichtung nach Anspruch 2, dadurch gekennzeichnet, daß mehrere Hülsenpaare vorgesehen sind und die Dimensionen der Hülsen von den Durchmessern der zu schneidenden Rohre abhängig sind, und die Hülsen derart eingerichtet sind, daß sie lösbar befestigt werden können.

4. Vorrichtung nach einem der Ansprüche 2 und 3, dadurch gekennzeichnet, daß jede rohrförmige Hülse die Form eines schief abgeschnittenen kreisförmigen Zylinders aufweist, während Markierungen und/oder Befestigungsmittel vorgesehen sind derart, daß die große Längsabmessung nach oben und in das Innere des Gehäuses (11) weisend angeordnet ist und die zu ihrer Längsachse im wesentlichen senkrechte kreisförmige Basis nach außen weisend angeordnet ist.

5. Vorrichtung nach einem der Ansprüche 1-4, dadurch gekennzeichnet, daß der Rand der Hülsen, mit welchem sie in das Gehäuse eingeführt werden, gegen die Längsachse dieser Hülsen leicht abgeschrägt ist.

## Claims

1. Apparatus for cutting tubes comprising at least one knife (6) which cooperates at the end of cutting with a counterpart referred to hereinafter as a counter knife (7) disposed inside the tube (1) being cut and which is linked mechanically to a core (8) of high magnetic permeability, while a winding (10) is wound in a carcass (11) around the tube being cut to create a magnetic field in said core (8) through the tube (1) being cut so as to be able to influence the longitudinal position of said core (8) and thus that of the counter knife (7) magnetically, the apparatus being characterised in that the carcass (11) is annular and exhibits an outer cylindrical cover (11″), a central cylindrical part (11′), which is made of a material of low magnetic permeability, and two axial ends which in contrast comprise elements (12a, 12b) made of a material of high magnetic permeability to direct and shape the induction lines.

2. Apparatus as in claim 1, characterised in that it comprises at least one pair of tubular sleeves (13a, 13b) which are fitted to each of the axial ends of the carcass and which are formed of a material of high magnetic permeability, the outside and inside diameters respectively of each sleeve being adapted to the inside diameter of the end elements (12a, 12b) of the carcass and the outside diameter of the tube (1) being cut respectively.

3. Apparatus as in claim 2, characterised in that a plurality of pairs of sleeves are provided the dimensions of which depend on the diameters of the tubes being cut, said sleeves being arranged so as to be able to be fixed in a detachable manner.

4. Apparatus as in one of claims 2 and 3, characterised in that each tubular sleeve has the form of length of circular cylinder, while markers and/or fixing means are provided so that the large longitudinal dimension is disposed towards the upper part and towards the inside of the carcass (11), the circular base substantially perpendicular to its longitudinal axis being disposed on the side facing outwards.

5. Apparatus as in one of claims 1 to 4, characterised in that the end of the sleeves by which these are introduced into the carcass is slightly chamfered towards the longitudinal axis of said sleeves.

*Fig. 1*

*Fig. 2*